# EUROPÄISCHE PATENTSCHRIFT

(11) **EP 2 283 305 B1**
(45) Veröffentlichungstag und Bekanntmachung des Hinweises auf die Patenterteilung: **21.09.2016**
(21) Anmeldenummer: 09737963.0
(22) Anmeldetag: 01.04.2009
(51) Int. Cl.: G01B 9/02

(54) **INTERFEROMETRISCHE ANORDNUNG SOWIE VERFAHREN ZUM EINSTELLEN EINES GANGUNTERSCHIEDS**
INTERFEROMETRIC ARRANGEMENT AND METHOD FOR ADJUSTING A PATH DIFFERENCE
ENSEMBLE INTERFÉROMÉTRIQUE ET PROCÉDÉ POUR AJUSTER UNE DIFFÉRENCE DE TRAJET

(30) Priorität: 30.04.2008 DE 102008001482
(43) Veröffentlichungstag der Anmeldung: 16.02.2011
(73) Patentinhaber: Robert Bosch GmbH, 70442 Stuttgart (DE)
(72) Erfinder: FLEISCHER, Matthias, 73760 Ostfildern (DE); SEIFFERT, Thomas, 70839 Gerlingen (DE)
(86) Internationale Anmeldenummer: PCT/EP2009/053878
(87) Internationale Veröffentlichungsnummer: WO 2009/132919

(56) Entgegenhaltungen:
- JP-A- 2009 036 601
- US-A1- 2004 174 535

## Beschreibung

### Stand der Technik

Die Erfindung betrifft eine interferometrische Anordnung, insbesondere eine Weißlichtinterferometeranordnung, zum Vermessen eines Messobjektes, insbesondere zum Vermessen mindestens einer Fläche eines Messobjektes, gemäß dem Oberbegriff des Anspruchs 1 sowie ein Verfahren zum Einstellen eines Gangunterschiedes zwischen Messstrahlen und Referenzstrahlen in einer interferometrischen Anordnung gemäß Anspruch 12.

Bei Weißlichtinterferometern wird der optische Gangunterschied zwischen Messstrahlen und Referenzstrahlen in Schritten mit Hilfe eines Piezostellers verändert. Dabei werden Detektorbilder (Kamerabilder) aufgezeichnet. Der optische Gangunterschied, bei dem Interferenzen in den Detektorbildern auftreten, ist ein Indikator für den gemessen Höhen- bzw. Abstandswert.

Bei den meisten Weißlichtinterferometern werden der Detektor und die Stellmittel unsynchronisiert und ohne Rücklesen nebeneinander betrieben. Sehr kostenintensive Weißlichtinterferometer regeln die Stellmittel mit Hilfe eines externen Laserinterferometers und halten so die Abtastung des Messobjektes pro Schritt konstant, jedoch bei freilaufendem Detektor. Eine Möglichkeit zur Synchronisierung des Detektors und der Stellmittel besteht darin, den zurückgelegten Verschiebeweg zu messen und bei geeigneten Abtastpunkten den Detektor in Abhängigkeit dieses Verschiebeweges zu triggern. Dies setzt allerdings den Einsatz eines triggerbaren Detektors voraus, wobei dann jedoch nur die halbe Geschwindigkeit des Detektors ausgenutzt werden kann, da typischerweise bei als Stellmitteln zum Einsatz kommenden Linearverstellern die Schwankung der Abtastbreite zwischen 50 % und 200 % liegt.

Ist die Kopplung zwischen der Abtastung durch den Detektor und der Änderung des optischen Gangunterschieds unpräzise, wirkt sich das auf die Genauigkeit des Messergebnisses aus. Insbesondere systematische Schwingungen verzerren dabei das Ergebnis überproportional. Durch die geringe Änderungsgeschwindigkeit des Gangunterschieds von typischerweise etwa 80 nm pro Kameratakt wirken sich zudem tribologische Effekte besonders stark aus.

Das Dokument US 2004/0174535 offenbart eine Interferometrische Anordnung zum Vermessen eines Messobjektes.

### Offenbarung der Erfindung

### Technische Aufgabe

Der Erfindung liegt daher die Aufgabe zugrunde, eine interferometrische Anordnung vorzuschlagen, mit der äußerst präzise Messungen durchführbar sind. Ferner besteht die Aufgabe darin, eine präzise Messung garantierendes Verfahren zum Einstellen des Gangunterschiedes zwischen Messstrahlen und Referenzstrahlen vorzuschlagen.

### Technische Lösung

Diese Aufgabe wird hinsichtlich der interferometrischen Anordnung mit den Merkmalen des Anspruchs 1 und hinsichtlich des Verfahrens mit den Merkmalen des Anspruchs 10 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, den insbesondere einen Linearversteller umfassenden Stellmitteln Synchronisationsmittel zuzuordnen, die derart ausgebildet sind, dass sie die Stellmittel derart ansteuern, dass der Gangunterschied, vorzugsweise durch Verstellen des Referenzelementes synchron zu den von dem, vorzugsweise eine Digitalkamera umfassenden erzeugten Bildern verstellt wird. Anders ausgedrückt wird mit Hilfe der Stellmittel mindestens ein Bauteil der interferometrischen Anordnung, insbesondere das Messobjekt, synchron zu den von dem Detektor aufgenommenen Bildern weiterbewegt, so dass eine präzise Kopplung zwischen der Abtastung des Messobjektes durch die Kamera und der Änderung des optischen Gangunterschieds erhalten wird, was sich positiv auf die Genauigkeit des erhaltenen Messergebnisses auswirkt. Noch anders ausgedrückt werden die Stellmittel mit Hilfe von Synchronisationsmitteln mit der Bildfrequenz der vom Detektor aufgenommenen Bilder synchronisiert, mit der Folge, dass sich der Gangunterschied zwischen den Messstrahlen und den Referenzstrahlen synchron mit der Bildfrequenz des Detektors ändert. Das Vorsehen derartiger Synchronisationsmittel ist insbesondere vorteilhaft bei mit kurzkohärentem Licht arbeitenden interferometrischen Anordnungen, da hier der optische Gangunterschied ein wesentlicher Indikator für den gemessen Höhen- bzw. Abstandswert ist. Insbesondere kann der Gangunterschied, bei Vorsehen einer später noch zu erläuterten speziellen optischen Anordnung zur Beleuchtung zweier Flächen des Messobjektes als Indikator für die Dicke des Messobjektes ausgewertet werden. Das Bewegungsmuster, mit dem die Stellmittel den Gangunterschied einstellen, muss nicht in gleichmäßigen Schritten erfolgen, was jedoch bevorzugt ist. Es kann auch eine kontinuierliche Gangunterschiedverstellung realisiert werden. Alternativ ist es möglich, dass komplexe Bewegungsmuster, insbesondere durch das Vorsehen einer Lookup-Tabelle, realisiert werden, wie dies grundsätzlich in "Claus Richter, Gerd Häusler: DGaO-Proceedings, 106, A4 (2005)" beschrieben ist.

Von besonderem Vorteil erfolgt das Verstellen mittels der Stellmittel in den (minimalen) Pausen zwischen zwei Bildern. Insbesondere wenn die Stellzeit nicht ausreicht, kann es vorteilhaft sein zusätzlich zu den Stellmitteln eine Lichtquelle zur Beleuchtung des Messobjektes in Abhängigkeit der Bilder, d.h. der Bildfrequenz des Detektors zu triggern, d.h. das Messobjekt synchron mit den Bildern gepulst zu beleuchten, um auf diese Weise zu gewährleisten, dass nur bei nicht aktiven Stellmitteln ein (sichtbares) Bild vom Detektor aufgenommen wird. Die Synchronisierung der Lichtquelle mit dem Detektor kann dabei wie in der DE 10 2008 008 559.6 beschrieben realisiert werden, die diesbezüglich als zum Offenbarungsgehalt der vorliegenden Anmeldung gehörig offenbart gelten soll.

Von besonderem Vorteil ist eine Ausführungsform der interferometrischen Anordnung, bei der die Synchronisationsmittel derart ausgebildet sind, dass sie die Stellmittel so ansteuern, dass jedem von dem Detektor aufgenommenen Bild ein definierter Gangunterschied, d.h. eine definierte Relativposition zwischen zwei verstellbaren Bauelementen der Anordnung, insbesondere des Referenzelementes relativ zum Detektor, entspricht. Somit kann jedem Bild ein definierter Gangunterschied zwischen den Messstrahlen und den Referenzstrahlen zugeordnet werden und in der Folge der exakte (Relativ-) Positionswert bestimmt werden, an dem zum ersten Mal eine Interferenz zwischen den vom Messobjekt reflektierten Messstrahlen und der, insbesondere vom Referenzelement reflektierten, Referenzstrahlen auftritt.

Besonders bevorzugt ist eine Ausführungsform, bei der die Stellmittel mindestens einen Linearversteller, vorzugsweise einen Piezosteller (Piezocontroller) umfassen. Mit einem Piezocontroller können sehr exakt minimale Verstellwege realisiert werden. Besonders bevorzugt ist der Piezosteller derart angeordnet, dass dieser das Referenzelement, insbesondere einen Spiegel, definiert relativ zum Detektor verstellt, wobei mittels des Piezostellers auch andere Bauelemente der Anordnung verstellt werden können, um den Gangunterschied zwischen den Messstrahlen und dem Referenzstrahl zu beeinflussen, beispielsweise das Messobjekt selbst.

Besonders bevorzugt sind die Synchronisationsmittel derart ausgebildet, dass sie ein Detektorsignal, insbesondere ein Videosignal, des Detektors auswertend ausgebildet sind. Insbesondere überwachen die Synchronisationsmittel das Detektorsignal auf das Auftreten von signifikanten, dem Signal integralen Impulsen. Besonders bevorzugt überwachen die Synchronisationsmittel das Detektorsignal im Hinblick auf das Auftreten von Bildframesynchronisationsimpulsen, auf deren Basis die Synchronisationsmittel in der Folge Triggersignale zum direkten oder indirekten Ansteuern der Stellmittel erzeugen.

Die Synchronisationsmittel eine Abtrennschaltung umfasst, die in Abhängigkeit des Auftretens eines dem Detektorsignal integralen Impulses, insbesondere eines Bildframeimpulses, ein Triggersignal erzeugen, in dessen Abhängigkeit die Stellmittel den Gangunterschied der Messstrahlen zu den Referenzstrahlen, d.h. die Relativposition zwischen zwei Bauelementen der interferometrischen Anordnung einstellen.

Die Synchronisationsmittel einen, insbesondere als Zählerschaltung realisierten, Zähler umfasst, dessen Zählerwert in Abhängigkeit des Triggersignals, insbesondere um einen definierten, vorgegebenen oder vorgebbaren, Wert verändert, insbesondere erhöht, wird. Dabei ist es besonders bevorzugt, wenn der Gangunterschied, der mittels der Stellmittel einstellbar ist, zu dem Zählerwert proportional ist. Dies kann insbesondere dadurch erreicht werden, dass der Zählerwert einem Digital-Analogwandler zugeleitet wird, wobei die Stellmittel von dem Digital-Analogwandler angesteuert werden, derart, dass die Stellmittel auf einen der Ausgangsspannung des Digital-Analogwandlers proportionellen Positions-Wert (Gangunterschied) regeln.

Besonders bevorzugt ist es, wenn der Zähler als Zählerschaltung realisiert ist, die in einen programmierbaren integrierten Schaltkreis, insbesondere einen Fied-Programmable-Gate-Array-(FPGA)integriert ist, so dass Änderungen an der Zählerschaltung durch einfaches Programmieren eines EEPROMs durchgeführt werden können.

Von besonderem Vorteil ist eine Ausführungsform der interferometrischen Anordnung, bei der der Detektor mindestens eine Digitalkamera umfasst, mit der Bilder der Überlagerung der von dem Messobjekt reflektierten Messstrahlen, und der, insbesondere von dem Referenzelement reflektierten, Referenzstrahlen aufgenommen werden.

Wie eingangs erwähnt, ist es besondere bevorzugt, wenn die interferometrische Anordnung mit kurzkohärentem Licht arbeitend ausgebildet ist. Anders ausgedrückt ist zum Erzeugen der Messstrahlen und der Referenzstrahlen eine gemeinsame, kurzkohärentes Licht ausstrahlende Lichtquelle vorgesehen. Besonders bevorzugt handelt es sich dabei um eine Weißlichtquelle.

Die Erfindung führt auch auf ein Verfahren zum Einstellen eines Gangunterschieds zwischen auf ein Messobjekt gerichteten Messstrahlen eines Messstrahlengangs und auf ein Referenzelement gerichteten Referenzstrahlen eines Referenzstrahlengangs in einer interferometrischen Anordnung, die vorzugsweise mittels kurzkohärentem Licht arbeitend ausgebildet ist. Dabei umfasst die interferometrische Anordnung zum Durchführen des Verfahrens mindestens einen, vorzugsweise eine Digitalkamera umfassenden, Detektor zum Erzeugen (Aufnehmen) von Bildern einer Überlagerung der vom Messobjekt reflektierten Messstrahlen und der, vorzugsweise vom Referenzelement reflektierten Referenzstrahlen. Erfindungsgemäß ist vorgesehen, dass der Gangunterschied zwischen den Messstrahlen und den Referenzstrahlen synchron zu den vom Detektor aufgenommenen Bildern, insbesondere zur Bildframefrequenz eingestellt wird. Bevorzugt wird der Gangunterschied zwischen den Referenzstrahlen und den Messstrahlen derart mit dem Detektor synchronisiert, dass jedem vom Detektor aufgenommenen Bild ein definierter Gangunterschied, d.h. eine definierte Relativposition zwischen zwei Bauelementen der interferometrischen Anordnung, vorzugsweise zwischen dem, insbesondere als Spiegel ausgebildeten, Referenzelement und dem Detektor entspricht.

Besonders bevorzugt ist eine Ausführungsform der interferometrischen Anordnung, bei der diese eine optische Anordnung zur Beleuchtung von mindestens einer Fläche des Messobjektes umfasst, wobei die optische Anordnung im Messstrahlengang der interferometrischen Anordnung, insbesondere eines Interferometer-Messkopfes der interferometrischen Anordnung angeordnet ist. Die optische Anordnung zur Beleuchtung von mindestens einer Objektfläche sieht bevorzugt zumindest ein erstes optisches Element vor, welches bei eingeleiteten Lichtstrahlen (Messstrahlen) einer strahlenerzeugenden Lichtquelle mindestens einen ersten und mindestens einen zweiten Strahlengang erzeugt. Dabei sind die Lichtstrahlen im ersten Strahlengang über ein im Lichtweg dem ersten optischen Element nachgeschaltetes zweites optisches Element auf eine erste Objektfläche, bevorzugt senkrecht, gerichtet. Ferner sind Lichtstrahlen im zweiten Strahlengang über ein im Lichtweg dem ersten optischen Element nachgeschaltetes drittes optisches Element auf eine zweite Objektfläche, vorzugsweise senkrecht, gerichtet. In vorteilhafter Weise entstammen die Lichtstrahlen im ersten Strahlengang aus einem möglichst großen Bereich des Querschnitts der auf das erste optische Element eingeleiteten Lichtstrahlen, bevorzugt aus dem kompletten Querschnitt. Des Weiteren entstammen auch die Lichtstrahlen im zweiten Strahlengang aus einem möglichst großen Bereich des Querschnitts der auf das erste optische Element eingeleiteten Lichtstrahlen, ebenfalls bevorzugt aus dem kompletten Querschnitt.

Daneben können noch weitere optische Elemente zur Strahlenführung der eingeleiteten Lichtstrahlen (Messstrahlen), der Lichtstrahlen im zumindest ersten Strahlengang und/oder der Lichtstrahlen im zumindest zweiten Strahlengang angeordnet sein. Gemeint ist hierbei die Strahlenführung der Lichtstrahlen zu einer Objektfläche und/oder der reflektierten Lichtstrahlen von der jeweiligen Objektfläche weg in Richtung des Detektors der interferometrischen Anordnung.

Die senkrecht auf die Objektflächen gerichteten und dann reflektierten Lichtstrahlen durchlaufen den zuvor jeweils zu einer Objektfläche gebildeten ersten und/oder zweiten Strahlengang dann entgegengerichtet zurück. In vorteilhafter Weise sind zumindest jeweils auf einem Längsabschnitt ihres Lichtweges die reflektierten Lichtstrahlen im ersten Strahlengang und die reflektierten Lichtstrahlen im zweiten Strahlengang parallel zueinander orientiert.

Ein besonders großer Vorteil ergibt sich, wenn der erste und der zweite Strahlengang der reflektierten Lichtstrahlen zumindest eine teilweise räumliche Überdeckung aufweisen. Zusätzlich vorteilhaft ist, wenn innerhalb dieser Überdeckung die reflektierten Lichtstrahlen aus dem ersten und dem zweiten Strahlengang parallel zueinander orientiert sind. Dies bedeutet, dass die räumliche Überdeckung der Strahlengänge sowohl durch die reflektierten Lichtstrahlen auf dem ersten Strahlengang als auch durch die reflektierten Lichtstrahlen aus dem zweiten Strahlengang durchlaufen werden. Bevorzugt wird die Überdeckung der Strahlengänge der reflektierten Lichtstrahlen durch die Anordnung eines mindestens ersten optischen Elementes eingeleitet. Besonders vorteilhaft ist eine vollständige Überdeckung der Strahlengänge der reflektierten Lichtstrahlen. In vorteilhafter Weise entspricht die Überdeckung im Querschnitt dem gesamten Querschnitt der in die optische Anordnung eingeleiteten Lichtstrahlen (Messstrahlen).

Bevorzugt ist die optische Anordnung im Messstrahlengang eines Interferometer-Messkopfes angeordnet. Somit werden die Messstrahlen in die optische Anordnung eingeleitet und dann zur Beleuchtung der Objektflächen genutzt.

Die interferometrische Anordnung hat, insbesondere aufgrund der speziellen Ausbildung der optischen Anordnung gegenüber dem Stand der Technik den Vorteil, dass in idealer Weise ein großes Messfeld als beleuchtete Objektfläche realisiert werden kann. Insbesondere dann, wenn der gesamte Querschnitt der innerhalb der optischen Anordnung eingeleiteten Messstrahlen jeweils zur Bildung des mindestens ersten und/oder des mindestens zweiten Strahlengangs genutzt wird.

Von besonders großem Vorteil ist, dass zur Abbildung der jeweils gemessenen Objektfläche auf einen Detektor der interferometrischen Anordnung eine große Detektorfläche, bevorzugt die gesamte Detektorfläche, genutzt werden kann. Dies wird dadurch ermöglicht, indem die Strahlengänge der an den Objektflächen reflektierten Lichtstrahlen sich zumindest teilweise, bevorzugt vollständig überdecken und die reflektierten Lichtstrahlen dann bevorzugt mittig zentriert auf die Detektorfläche treffen. Das bedeutet, dass zumindest teilweise gleiche Bereiche der Detektorfläche bei der Vermessung einer ersten Objektfläche und einer zweiten Objektfläche belichtet werden können. So kann in vorteilhafter Weise bei der Vermessung von kreisförmigen Objektflächen im Vergleich zum Stand der Technik eine vier Mal so große Fläche des Detektors zur Abbildung benutzt werden.

In vorteilhafter Weise verdoppelt sich damit auch die laterale Auflösung bei Vermessung einer Objektfläche. Dies bedeutet, dass die Messung der gleichen Objektflächen wesentlich genauer erfolgt, als das mit einer bisher bekannten Messvorrichtung der Fall ist. Es ist ebenso möglich bei mindestens einer gleichen Messgenauigkeit und/oder mindestens einer gleichgroßen zu vermessenden Objektfläche einen kleineren Detektor zu verwenden. Umgekehrt ist es auch möglich, die Detektorgröße beizubehalten und stattdessen den Querschnitt der in die optische Anordnung eingeleiteten Messstrahlen zu verkleinern. Dadurch werden die zu vermessenden Objektflächen in günstiger Weise mit einer größeren Lichtintensität beleuchtet. Somit können auch bei schlecht reflektierten Objektflächen deren Abbildung auf dem Detektor erzielt werden.

Besonders vorteilhaft ist es, dass bei der optischen Anordnung zur Beleuchtung mindestens einer Fläche des Messobjektes die optischen Elemente derart angeordnet sind, dass die auf die erste Objektfläche gerichteten Lichtstrahlen parallel oder antiparallel zu den auf die zweite Objektfläche gerichteten Lichtstrahlen orientiert sind. Demnach können parallel zueinander angeordnete Objektflächen beleuchtet werden. Innerhalb der interferometrischen Anordnung kann in idealer Weise dann der Abstand beider Objektflächen zueinander vermessen werden. Bei entgegengerichteten parallelen Objektflächen lässt sich somit die Dicke des Objektes an der Stelle der gemessenen Objektflächen bestimmen. Ebenso lässt sich die Parallelität der Objektflächen zueinander prüfen.

Besonders vorteilhaft ist es, wenn in der optischen Anordnung zumindest eines der optischen Elemente ein Strahlenteiler ist. In günstiger Weise kann dann die Strahlenführung der auf den Strahlenteiler einfallenden Lichtstrahlen so beeinflusst werden, dass die Lichtstrahlen geteilt werden und somit zumindest Lichtstrahlen in einem ersten und zumindest Lichtstrahlen in einem zweiten Strahlengang gebildet werden. Unter einem Strahlenteiler ist hierbei ein optisches Element zu verstehen, bei dem Lichtstrahlen in dem zumindest ersten gebildeten Strahlengang und im zumindest zweiten gebildeten Strahlengang aus zumindest einem gleichen Querschnittsbereich der auf den Strahlenteiler eingeleiteten Lichtstrahlen entstammen, bevorzugt aus dem gesamten Querschnitt. Ein sehr einfacher derartiger Strahlenteiler ist eine teilverspiegelte Glasscheibe, die beispielsweise in einem Winkel von 45° zu den eingeleiteten Lichtstrahlen angeordnet ist. Ein Teil der auftreffenden Lichtstrahlen wird an der Objektfläche der Scheibe im Winkel von 90° reflektiert, ein weiterer Teil durchdringt die Scheibe. In einer sehr verbreiterten Form besteht ein derartiger Strahlenteiler aus zwei Prismen, die mit einem optischen Kleber, wie beispielsweise dem UV-Kleber Norland Optical Adhesive 63, verklebt sind.

Eine besondere Ausführungsform der optischen Anordnung sieht vor, dass das erste optische Element zur Bildung mindestens eines ersten und mindestens eines zweiten Strahlengangs ein Strahlenteiler ist. In vorteilhafter Weise werden dann die zumindest erste und die zumindest zweite Objektfläche gleichzeitig beleuchtet.

Eine Ausführungsvariante sieht weiterhin vor, einen Strahlenteiler zu verwenden, bei dem die Lichtstrahlen im gebildeten ersten Strahlengang vorzugsweise rechtwinklig zu den auf den Strahlenteiler einfallenden Lichtstrahlen orientiert sind. Ferner wird ein Strahlenteiler vorgeschlagen, bei dem die Lichtstrahlen im gebildeten zweiten Strahlengang gleichgerichtet und ohne Ablenkung zu den auf den Strahlenteiler einfallenden Lichtstrahlen gerichtet sind. Bevorzugt wird dann eine solche vorgeschlagene optische Anordnung innerhalb der interferometrischen Anordnung derart positioniert, dass die optische Achse des gebildeten zweiten Strahlengangs auf der optischen Achse der im interferometrischen System gebildeten Messstrahlen liegt.

Generell vorteilhaft für die Ausbildung der optischen Anordnung ist es, wenn zumindest ein optisches Element ein Spiegel oder ein Prisma ist, um beispielsweise Lichtstrahlen durch Reflektion in eine bevorzugte Strahlenrichtung abzulenken. Lichtablenkungen infolge von Lichtbrechung innerhalb des Prismas sind vorzugsweise zu vermeiden. Ansonsten erfolgt zusätzlich eine spektrale Aufspaltung des Lichtes.

Eine weitere vorteilhafte Ausführungsform der optischen Anordnung schlägt vor, als dem ersten optischen Element nachgeschaltetes zweites und/oder drittes optisches Element einen Spiegel und/oder ein Prisma einzusetzen. Interferometrische Systeme weisen in der Regel eine fixe - so genannte - Arbeitslänge auf. Bei dieser Arbeitslänge handelt es sich dabei um den maximalen zurückgelegten optischen Weg von an einer Objektfläche reflektierten Messstrahlen, bei dem über das Objektiv noch eine fokussierte Abbildung der Objektfläche auf dem Detektor erzielt werden kann. In vorteilhafter Weise verlängern Prismen diesen Arbeitsweg um etwa 1/3 ihres durchlaufenen Glasweges. Zusätzlich ist die Gefahr von im Strahlengang auftretenden Luftströmungen reduziert, die in der Regel das Messergebnis negativ beeinflussen.

Von besonderem Vorteil ist es, wenn zumindest ein optisches Element der optischen Anordnung zur Brechung der Lichtstrahlen eine Linse oder ein Linsensystem ist. In vorteilhafter Weise kann der Querschnitt der Lichtstrahlen in Richtung des Lichtweges verkleinert werden. Dadurch kann die Lichtintensität im anschließenden Strahlengang vergrößert werden. Ebenso ist es möglich, den Querschnitt der Lichtstrahlen zu vergrößern. Insgesamt wird dadurch beispielsweise erreicht, dass eine größere Objektfläche beleuchtet werden kann.

### Kurze Beschreibung der Zeichnungen

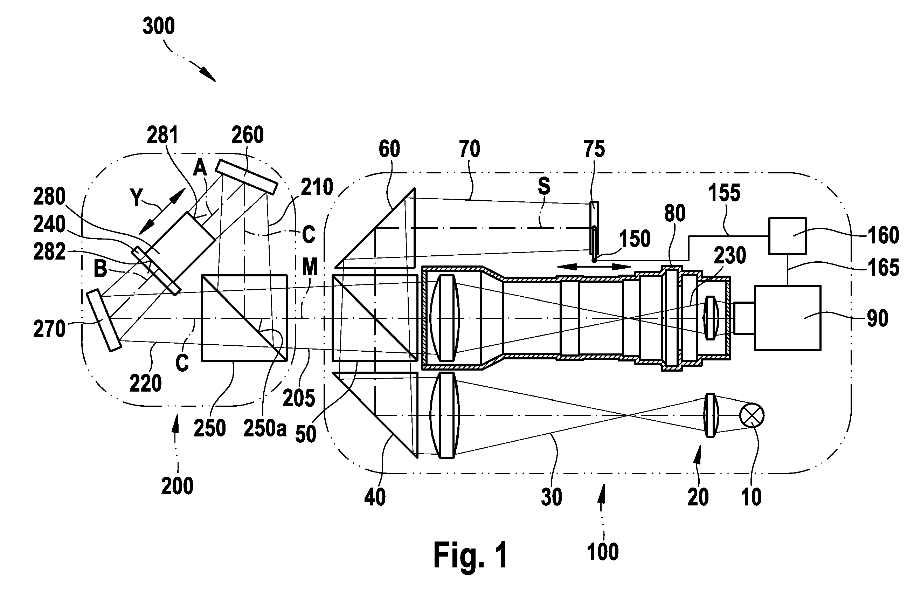

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in der einzigen Fig. 1 eine schematische Darstellung einer interferometrischen Anordnung, umfassend eine optische Anordnung.

### Ausführungsform der Erfindung

In Fig. 1 ist eine interferometrische Anordnung 300 zum Vermessen von Objektflächen gezeigt, dabei ist mit 100 ein Interferometer-Messkopf bezeichnet. Der Interferometer-Messkopf 100 ist dabei in Form eines flächenhaft messenden Interferometers, hier eines Weißlichtinterferometers, aufgebaut. Der Aufbau enthält eine strahlenerzeugende Lichtquelle 10, welche kurzkohärente Lichtstrahlen in eine Beleuchtungsoptik 20 ausstrahlt. Dadurch wird ein Beleuchtungsstrahlengang 30 gebildet. Ein im Beleuchtungsstrahlengang 30 angeordnetes erstes Dachprisma 40 bewirkt eine Ablenkung der Lichtstrahlen derart, dass die Lichtstrahlen senkrecht auf einen ersten Strahlenteiler 50 gerichtet sind. Der erste Strahlenteiler 50 bewirkt eine Teilung der Lichtstrahlen in einen Teil von Referenzstrahlen innerhalb eines Referenzstrahlenganges 70 und in einen Teil von Messstrahlen innerhalb eines Messstrahlenganges 205, dabei sind die Referenzstrahlen in die gleiche Richtung und die Messstrahlen im rechten Winkel zu den auf den Strahlenteiler 50 eintreffenden Lichtstrahlen des Beleuchtungsstrahlengangs 30 orientiert. Die Referenzstrahlen werden über einen im Referenzstrahlengang 70 angeordnetes zweites Dachprisma 60 derart abgelenkt, dass sie senkrecht auf ein Referenzelement 75, beispielsweise einen Referenzspiegel, gerichtet sind. Die dann am Referenzelement 75 reflektierten Referenzstrahlen durchlaufen somit den Referenzstrahlengang 70 über das zweite Dachprisma 60 bis zum ersten Strahlenteiler 50 entgegengerichtet wieder zurück. Durch eine weitere rechtwinklige Ablenkung durch den ersten Strahlenteiler 50 sind die Referenzstrahlen letztendlich durch ein im Lichtweg angeordnetes Objektiv 80 hindurch auf einen Detektor 90, hier eine Digitalkamera, gerichtet. Die Strahlenrichtung der auf dem Detektor 90 auftreffenden Referenzstrahlen ist entgegengerichtet zu den der vom ersten Strahlenteiler 50 gebildeten Messstrahlen.

In dem Messstrahlengang 205 des Interferometer-Messkopfes 100 ist eine optische Anordnung 200 angeordnet. Dabei sind die Messstrahlen auf einen zweiten Strahlenteiler 250 gerichtet. In vorteilhafter Weise deckt sich dabei die optische Achse des Messstrahlengangs 205 mit der optischen Achse des zweiten Strahlenteilers 250. Ein Versatz der optischen Achsen ist zulässig, insbesondere bis zu einem Versatzmaß, bei dem in vorteilhafter Weise sichergestellt ist, dass die Messstrahlen mit dem gesamten Querschnitt des Messstrahlenganges 205 auf den zweiten Strahlteiler 250 treffen. Der zweite Strahlenteiler 250 entspricht einem ersten optischen Element innerhalb der optischen Anordnung 200 zur Bildung eines ersten Strahlengangs 210 und eines zweiten Strahlengangs 220. Dabei sind Lichtstrahlen im ersten Strahlengang 210 rechtwinklig zu den Messstrahlen orientiert, die Lichtstrahlen im zweiten Strahlengang 220 dagegen verlaufen in geradliniger Verlängerung zu den auf den zweiten Strahlenteiler 250 auftreffenden Messstrahlen.

Die Lichtstrahlen können sowohl im ersten Strahlengang 210 als auch im zweiten Strahlengang 220 in vorteilhafter Weise aus dem gesamten Querschnitt des Messstrahlengangs 205 entstammen. Demnach handelt es sich bei den Lichtstrahlen innerhalb des ersten und des zweiten Strahlengangs 210, 220 weiterhin um Messstrahlen mit jeweils durch die Teilung dann geringerer Lichtintensität. Außerdem entspricht der Querschnitt des ersten und des zweiten Strahlengangs 210, 220 in günstiger Weise dem Querschnitt des Messstrahlenganges 205.

Im ersten Strahlengang 210 ist ein erster Spiegel 260 derart angeordnet, dass Messstrahlen durch Reflektion dann senkrecht auf eine erste Objektfläche 281 eines Messobjektes 280 gerichtet sind. Ebenso ist im zweiten Strahlengang 220 ein zweiter Spiegel 270 derart angeordnet, dass Messstrahlen auf eine zweite Objektfläche 282 des Messobjektes 280 gerichtet sind. Dabei ist das Messobjekt 280 mit der zweiten Objektfläche 282 auf einen strahlungsdurchlässigen Träger 240 aufliegend angeordnet. Demnach ist die gezeigte interferometrische Anordnung 300 im Raum derart angeordnet, dass die erste Objektfläche 281 in vertikaler Raumrichtung Y von oben beleuchtet wird und die zweite Objektfläche 282 in vertikaler Raumrichtung Y von unten durch den strahlendurchlässigen Träger 240 hindurch beleuchtet wird. Die an der ersten und an der zweiten Objektfläche 281, 282 reflektierten Messstrahlen durchlaufen dann den ersten und den zweiten Strahlengang 210, 220 über den ersten und den zweiten Spiegel 260, 270 bis zum weiteren Strahlenteiler 250 entgegengerichtet zurück. Die reflektierten Messstrahlen aus dem zweiten Strahlengang 220 werden ohne Ablenkung dann achsparallel in das Objektiv 80, beispielsweise ein telezentrisches Objektiv, eingeleitet und senkrecht auf den Detektor 90 gerichtet. Die Messstrahlen im ersten Strahlengang 210 dagegen werden durch den zweiten Strahlenteiler 250 rechtwinklig zu ihrer bisherigen Strahlenrichtung abgelenkt und dann achsparallel in das Objektiv 80 eingeleitet und dann ebenfalls senkrecht auf den Detektor 90 gerichtet.

Der Strahlengang der an der ersten Objektfläche 281 reflektierten Messstrahlen und der Strahlengang der an der zweiten Objektfläche 282 reflektierten Messstrahlen sind innerhalb des Abbildungsstrahlenganges 230 des Objektivs 80 deckungsgleich. Die auf dem Detektor 90 auftreffenden reflektierten Messstrahlen interferieren mit den ebenfalls im Abbildungsstrahlengang 230 enthaltenen und auf den Detektor 90 auftreffenden Referenzstrahlen.

Das Messobjekt 280 wird innerhalb der optischen Anordnung 200 derart angeordnet, dass die auf die erste Objektfläche 281 auftreffenden und dann reflektierten Messstrahlen und die auf die zweite Objektfläche 282 auftreffenden und ebenfalls reflektierten Messstrahlen unterschiedliche optische Wege durchlaufen. Die gesamte Wegdifferenz beider optischer Weglängen ist vorzugsweise größer als die Kohärenzlänge der Lichtquelle 10. Damit wird verhindert, dass die von der ersten Objektfläche 281 und zweiten Objektfläche 282 reflektierten Messstrahlen miteinander interferieren. Eine Interferenz mit den Referenzstrahlen erfolgt dann, wenn die optische Weglänge der Messstrahlen mit der optischen Weglänge der Referenzstrahlen übereinstimmt. Um den Gangunterschied zwischen den Messstrahlen und den Referenzstrahlen verändern zu können, ist die optische Weglänge der Referenzstrahlen und damit der Gangunterschied zwischen den Messstrahlen und den Referenzstrahlen einstellbar, indem das Referenzelement 75 mit Hilfe von einen Piezosteller umfassenden Stellmittel 150 verschiebbar auf der optischen Wegachse der Referenzstrahlen angeordnet ist. Eine ggf. realisierte Veränderung und Anpassung der optischen Weglänge für die Messstrahlen der ersten Objektfläche 281 oder der zweiten Objektfläche 282 wird bevorzugt durch eine relative Verschiebung des Interferometer-Messkopfes 100 und der optischen Anordnung 200 in Richtung der optischen Achse M mit Hilfe von Stellmitteln erreicht. Eine alternative Ausführungsvariante sieht vor, dass der erste Spiegel 260, der zweite Spiegel 270 und/oder der zweite Strahlenteiler 250 relativ zu dem Messobjekt jeweils mit Hilfe von Stellmitteln verschiebbar in Richtung ihrer optischen Achse A, B, C angeordnet sind, ggf. zusätzlich mit einer möglichen Verschiebung des Interferometer-Messkopfes 100 mit Hilfe von geeigneten Stellmitteln.

Der Abstand der ersten Objektfläche 281 zur zweiten Objektfläche 282 entspricht der Objektdicke. Bevor die Objektdicke eines Messobjektes 280 durch einen Messvorgang ermittelt wird, wird die interferometrische Anordnung 300 in einem ersten Schritt mit einem Endmaß bekannter Dicke kalibriert. Das Endmaß wird anstelle des Messobjektes 280 auf den Träger 240 positioniert. Der Interferometer-Messkopf 100 wird in die Position verschoben, bei der der optische Weg von der strahlenteilenden Fläche 250a des Strahlenteilers 250 bis zur ersten Objektfläche 281 dem optischen Weg von der strahlenteilenden Fläche 250a des zweiten Strahlers 250 bis zum Referenzelement 75 entspricht. In dieser Position interferieren die an der ersten Objektfläche 281 reflektierten Messstrahlen mit den Referenzstrahlen, so dass ein entsprechendes erstes Interferenzmuster auf dem Detektor 90 sichtbar wird. Das Endmaß ist so positioniert, dass der optische Weg von der strahlenteilenden Fläche 250a des zweiten Strahlenteilers 250 zur zweiten Objektfläche 282 geringfügig länger oder kürzer ist, als die optische Weglänge der Referenzstahlen. Somit kommt es zu keiner Interferenz der an der zweiten Objektfläche 282 reflektierten Messstrahlen mit den Referenzstrahlen. Demnach ist auch kein zweites Interferenzmuster am Detektor 90 sichtbar. Erst durch Verschiebung eines Bauelementes der interferometrischen Anordnung 300, beispielsweise des Referenzelementes 75 mit Hilfe der Stellmittel 150 in Richtung der optischen Achse S des Referenzstrahlengangs 70 wird das zweite Referenzmuster aufgrund der resultierenden Änderung des Gangunterschieds zwischen den Messstrahlen und den Referenzstrahlen am Detektor 90 sichtbar. Gleichzeitig ist das erste Referenzmuster am Detektor nicht mehr sichtbar. Die Verschiebung beispielsweise des Referenzelementes 75 zwischen dem durch die erste Objektfläche 281 ausgebildeten ersten Interferenzmuster und dem durch die zweite Objektfläche 282 ausgebildeten zweiten Interferenzmuster wird z.B. mit einem hochgenauen Weggeber gemessen. Der dadurch ermittelte Verschiebeweg des Referenzelementes 75 wird als Kalibrierkonstante abgelegt. Anschießend wird das Messobjekt 280 in gleicher Weise vermessen und der Abstand des Referenzelementes 75 zwischen dem ersten ausgebildeten Interferenzmuster und dem zweiten Interferenzmuster ermittelt. Die Objektdicke wird dann auf der bekannten Dicke des Endmaßes, der zuvor ermittelten Kalibrierkonstanten und dem für das Messobjekt 280 ermittelten Abstand des Referenzelementes 75 berechnet.

Im Folgenden wird eine Möglichkeit zur Einstellung des Gangunterschiedes zwischen den Messstrahlen und den Referenzstrahlen erläutert. Dabei wird davon ausgegangen, dass der Gangunterschied durch Verschieben des Referenzelementes 75 mit Hilfe von einem Piezosteller umfassenden Stellmitteln 150 erzielt wird. Zusätzlich oder alternativ kann mit geeignet angesteuerten Stellmitteln die Weglänge der Messstrahlen verändert werden.

Die Stellmittel 150 sind über eine Steuerleitung 155 signalleitend mit Synchronisationsmitteln 160 verbunden, welche wiederum signalleitend mit dem als Digitalkamera ausgebildeten Detektor 90 verbunden sind. Den Synchronisationsmitteln 160 wird über eine Signalleitung 165 das Detektorsignal, hier ein Videosignal, zugeleitet. Die Synchronisationsmittel 160 umfassen eine im Einzelnen nicht dargestellte Abtrennschaltung, mit deren Hilfe ein Triggersignal immer dann erzeugt wird, wenn die Synchronisationsmittel 160 das Auftreten eines Bildframesynchronisationsimpulses im Detektorsignal detektieren. Das jeweilige Triggersignal wird von den Synchronisationsmitteln 160 verwendet, um einen digitalen, als Zählerschaltung realisierten, Zähler der Synchronisationsmittel 160 um einen definierten Wert hochzuzählen. Der jeweils aktuelle Zählerwert wird an einen ebenfalls nicht gezeigten Digital-Analogwandler der Synchronisationsmittel 160 geleitet, der Stellmittel 150 ansteuert, die den Gangunterschied auf einen zur Ausgangsspannung des Digital-Analogwandlers proportionalen Wert regelt. Anders ausgedrückt stellen die Stellmittel 150 eine zur Ausgangsspannung des Digital-Analogwandlers proportionaler Relativposition zwischen dem Referenzelement 75 und dem Detektor 90 ein. Auf diese Weise wird erreicht, dass jedem vom Detektor 90 erzeugten Bild eine definierte Relativposition zwischen dem Referenzelement 75 und dem Detektor 90 und damit ein definierter Gangunterschied entspricht. Die Zählerschaltung der Synchronisationsmittel 160 ist vorzugsweise in einem FPGA realisiert, so dass Änderungen an der Schaltung durch einfaches Programmieren eines EEPROMs durchgeführt werden können. Die Verstellbewegung des Strahlenteilers 50 (optisches Element) mit Hilfe der Stellmittel 150 kann in gleichmäßigen Schritten in Abhängigkeit der Bildfrequenz des Detektors erfolgen. Es ist auch eine kontinuierliche Verstellbewegung oder ein komplexes Bewegungsmuster durch Integration einer Lookup-Tabelle realisierbar.

## Patentansprüche

1. Interferometrische Anordnung zum Vermessen eines Messobjektes (280), mit Mitteln zum Erzeugen eines Messstrahlengangs (205) mit auf das Messobjekt (280) gerichteten Messstrahlen, mit Mitteln zum Erzeugen eines Referenzstrahlengangs (70) mit auf ein Referenzelement (75) gerichteten Referenzstrahlen, mit Stellmitteln (150) zum Einstellen eines Gangunterschieds zwischen den Messstrahlen und den Referenzstrahlen, und mit einem Detektor (90) zum Aufnehmen von Bildern der Überlagerung der vom Messobjekt (280) reflektieren Messstrahlen und der Referenzstrahlen, wobei Synchronisationsmittel (160) vorgesehen sind, die die Stellmittel (150) derart ansteuern, dass der Gangunterschied zwischen den Messstrahlen und den Referenzstrahlen synchron zu den vom Detektor (90) aufgenommenen Bildern eingestellt wird,
**dadurch gekennzeichnet,**
**dass** die Synchronisationsmittel (160), insbesondere mittels einer Abtrennschaltung, ein Triggersignal auf Basis des Detektorsignals, insbesondere eines integralen Impulses des Detektorsignals, vorzugsweise eines Bildframesynchronisationsimpulses, erzeugend ausgebildet sind und dass die Synchronisationsmittel (160) einen Zähler umfassen, dessen Zählerwert in Abhängigkeit des Triggersignals, insbesondere um einen definierten Wert, verändert, vorzugsweise erhöht, wird.

2. Interferometrische Anordnung nach Anspruch 1,
**dadurch gekennzeichnet,**
**dass** die Synchronisationsmittel (160) die Stellmittel (150) derart ansteuern, dass jedem von dem Detektor (90) aufgenommenen Bild ein definierter Gangunterschied entspricht.

3. Interferometrische Anordnung nach einem der Ansprüche 1 oder 2,
**dadurch gekennzeichnet,**
**dass** die Stellmittel (150) mindestens einen Piezosteller umfassen.

4. Interferometrische Anordnung nach einem der vorhergehenden Ansprüche,
**dadurch gekennzeichnet,**
**dass** die Synchronisationsmittel (160) ein Detektorsignal, insbesondere ein Videosignal, zum Detektieren eines integralen Impulses, vorzugsweise eines Bildframesynchronisationsimpulses, auswertend ausgebildet und angeordnet sind.

5. Interferometrische Anordnung nach Anspruch 1,
**dadurch gekennzeichnet,**
**dass** der Gangunterschied, der mittels der Stellmittel (150) einstellbar ist, zu dem Zählerwert proportional ist.

6. Interferometrische Anordnung nach einem Ansprüche 1 oder 5,
**dadurch gekennzeichnet,**
**dass** der Zählerwert einem Digital-Analogwandler zuleitbar ist, und dass die Stellmittel (150) auf einen der Ausgangsspannung des Digital-Analogwandlers proportionalen Gangunterschied regelnd ausgebildet ist.

7. Interferometrische Anordnung nach einem der Ansprüche 1, 5 oder 6,
**dadurch gekennzeichnet,**
**dass** der Zähler in einem programmierbaren integrierten Schaltkreis, insbesondere in einem FPGA, realisiert ist.

8. Interferometrische Anordnung nach einem der vorhergehenden Ansprüchen,
**dadurch gekennzeichnet,**
**dass** der Detektor eine Digitalkamera umfasst.

9. Interferometrische Anordnung nach einem der vorhergehenden Ansprüchen,
**dadurch gekennzeichnet,**
**dass** zum Erzeugen der Messstrahlen und der Referenzstrahlen eine gemeinsame, kurzkohärentes Licht ausstrahlende, Lichtquelle (10) vorgesehen ist.

10. Verfahren zum Einstellen eines Gangunterschieds zwischen auf ein Messobjekt (280) gerichteten Messstrahlen eines Messstrahlengangs (205) und auf ein Referenzelement (75) gerichteten Referenzstrahlen eines Referenzstrahlengangs (70) in einer interferometrischen Anordnung (300), in der mittels eines Detektors (90) Bilder einer Überlagerung der vom Messobjekt (280) reflektierten Messstrahlen und der Referenzstrahlen aufgenommen werden, wobei der Gangunterschied synchron zu den vom Detektor (90) aufgenommenen Bildern eingestellt wird,
**dadurch gekennzeichnet,**
**dass** mittels Synchronisationsmitteln (160), insbesondere mittels einer Abtrennschaltung, ein Trikkersignal auf Basis des Detektorsignals, insbesondere eines integralen Impulses des Detektorsignals, vorzugsweise eines Bildframesynchronisationsimpulses, erzeugt wird und dass die Synchronisationsmittel (160) einen Zähler umfassen, dessen Zählwert in Abhängigkeit des Trikkersignals, insbesondere um einen definierten Wert, verändert, vorzugsweise erhöht wird.

## Claims

1. Interferometric arrangement for measuring a measurement object (280), having means for generating a measurement beam path (205) with measurement beams that are directed onto the measurement object (280), having means for generating a reference beam path (70) with reference beams that are directed onto a reference element (75), having actuating means (150) for setting a path difference between the measurement beams and the reference beams, and having a detector (90) for recording images of the superposition of the measurement beams, which are reflected by the measurement object (280), and the reference beams, wherein synchronization means (160) are provided which drive the actuating means (150) such that the path difference between the measurement beams and the reference beams is set synchronously to the images recorded by the detector (90),
**characterized**
**in that** the synchronization means (160) are configured to generate a trigger signal, in particular using a separation circuit, on the basis of the detector signal, in particular an integral pulse of the detector signal, preferably an image frame synchronization pulse, and in that the synchronization means (160) comprise a counter, the counter value of which is changed, preferably increased, in dependence on the trigger signal, in particular by a defined value.

2. Interferometric arrangement according to Claim 1,
**characterized**
**in that** the synchronization means (160) drive the actuating means (150) such that a defined path difference corresponds to each image recorded by the detector (90).

3. Interferometric arrangement according to either of Claims 1 and 2,
**characterized**
**in that** the actuating means (150) comprise at least one piezo actuator.

4. Interferometric arrangement according to one of the preceding claims,
**characterized**
**in that** the synchronization means (160) are configured and arranged to evaluate a detector signal, in particular a video signal, for detecting an integral pulse, preferably an image frame synchronization pulse.

5. Interferometric arrangement according to Claim 1,
**characterized**
**in that** the path difference which is settable using the actuating means (150) is proportional to the counter value.

6. Interferometric arrangement according to either of Claims 1 and 5,
**characterized**
**in that** the counter value is suppliable to a digital-to-analogue converter, and in that the actuating means (150) is configured to regulate a path difference that is proportional to the output voltage of the digital-to-analogue converter.

7. Interferometric arrangement according to one of Claims 1, 5 or 6,
**characterized**
**in that** the counter is implemented in a programmable integrated circuit, in particular in an FPGA.

8. Interferometric arrangement according to one of the preceding claims,
**characterized**
**in that** the detector comprises a digital camera.

9. Interferometric arrangement according to one of the preceding claims,
**characterized**
**in that** a common light source (10), which emits short-coherent light, is provided for generating the measurement beams and the reference beams.

10. Method for setting a path difference between measurement beams of a measurement beam path (205), which are directed onto a measurement object (280), and reference beams of a reference beam path (70), which are directed onto a reference element (75), in an interferometric arrangement (300), in which a detector (90) is used to record images of a superposition of the measurement beams, which are reflected by the measurement object (280), and the reference beams, wherein the path difference is set synchronously to the images recorded by the detector (90),
**characterized**
**in that** a trigger signal is generated by means of synchronization means (160), in particular using a separation circuit, on the basis of the detector signal, in particular an integral pulse of the detector signal, preferably an image frame synchronization pulse, and in that the synchronization means (160) comprise a counter, the count value of which is changed, preferably increased, in dependence on the trigger signal, in particular by a defined value.

## Revendications

1. Ensemble interférométrique destiné à mesurer un objet de mesure (280), comportant des moyens destinés à générer un chemin de faisceau de mesure (205) comportant des faisceaux de mesure orientés vers l'objet de mesure (280), comportant des moyens destinés à générer un chemin de faisceau de référence (70) comportant des faisceaux de référence orientés vers un élément de référence (75), comportant des moyens d'ajustement (150) destinés à ajuster une différence de chemin entre les faisceaux de mesure et les faisceaux de référence, et comportant un détecteur (90) destiné à acquérir des images de la superposition des faisceaux de mesure réfléchis par l'objet de mesure (280) et des faisceaux de référence, dans lequel il est prévu des moyens de synchronisation (160) qui commandent les moyens d'ajustement (150) de manière à ce que la différence de chemin entre les faisceaux de mesure et les faisceaux de référence soit ajustée en synchronisme avec les images acquises par le détecteur (90), **caractérisé en ce que** les moyens de synchronisation (160) sont réalisés de manière à générer, notamment au moyen d'un circuit séparateur, un signal de déclenchement sur la base du signal de détecteur, notamment d'une impulsion intégrale du signal de détecteur, de préférence d'une impulsion de synchronisation de trame d'image, et **en ce que** les moyens de synchronisation (160) comprennent un compteur dont la valeur de comptage est modifiée, de préférence augmentée, notamment d'une valeur définie, en fonction du signal de déclenchement.

2. Ensemble interférométrique selon la revendication 1,
**caractérisé en ce que** les moyens de synchronisation (160) commandent les moyens d'ajustement (150) de manière à ce que chaque image acquise par le détecteur (90) corresponde à une différence de chemin définie.

3. Ensemble interférométrique selon l'une quelconque des revendications 1 ou 2,
**caractérisé en ce que** les moyens d'ajustement (150) comprennent au moins un dispositif d'ajustement piézoélectrique.

4. Ensemble interférométrique selon l'une quelconque des revendications précédentes,
**caractérisé en ce que** les moyens de synchronisation (160) sont réalisés et disposés de manière à évaluer un signal de détecteur, notamment un signal vidéo, pour détecter une impulsion intégrale, de préférence une impulsion de synchronisation de trame d'image.

5. Ensemble interférométrique selon la revendication 1,
**caractérisé en ce que** la différence de chemin qui peut être ajustée à l'aide des moyens d'ajustement (150), est proportionnelle à la valeur de comptage.

6. Ensemble interférométrique selon l'une quelconque des revendications 1 ou 5,
**caractérisé en ce que** la valeur de comptage peut être fournie à un convertisseur numérique-analogique et **en ce que** les moyens d'ajustement (150) sont réalisés de manière à réguler la différence de chemin proportionnellement à une tension de sortie du convertisseur numérique-analogique.

7. Ensemble interférométrique selon l'une quelconque des revendications 1, 5 ou 6,
**caractérisé en ce que** le compteur est réalisé dans un circuit électrique intégré programmable, notamment dans un FPGA.

8. Ensemble interférométrique selon l'une quelconque des revendications précédentes,
**caractérisé en ce que** le détecteur comprend une caméra numérique.

9. Ensemble interférométrique selon l'une quelconque des revendications précédentes,
**caractérisé en ce qu'**il est prévu une source lumineuse (10) commune rayonnant une lumière à faible longueur de cohérence pour générer les faisceaux de mesure et les faisceaux de référence.

10. Procédé d'ajustement d'une différence de chemin entre des faisceaux de mesure orientés vers un objet de mesure (280) d'un chemin de faisceau de mesure (205) et des faisceaux de référence orientés vers un élément de référence (75) d'un chemin de faisceau de référence (70) dans un ensemble interférométrique (300), dans lequel des images d'une superposition des faisceaux de mesure réfléchis par l'objet de mesure (280) et des faisceaux de référence sont acquises au moyen d'un détecteur (90), dans lequel la différence de chemin est ajustée en synchronisme avec les images acquises par le détecteur (90),
**caractérisé en ce qu'**un signal de déclenchement est généré à l'aide de moyens de synchronisation (160), notamment au moyen d'un circuit de séparation, sur la base du signal de détecteur, notamment d'une impulsion intégrale du signal de détecteur, de préférence d'une impulsion de synchronisation de trame d'image, et **en ce que** les moyens de synchronisation (160) comprennent un compteur dont la valeur de comptage est modifiée, notamment d'une valeur définie, de préférence augmentée, en fonction du signal de déclenchement.
